# EUROPEAN PATENT APPLICATION

(11) **EP 4 746 458 A1**
(43) Date of publication of application: **20.05.2026**
(21) Application number: 24840033.5
(22) Date of filing: 08.07.2024
(51) Int. Cl.: H04W 4/42, H04W 4/48, H04W 4/80, G06Q 50/40

(54) **METHOD FOR DETERMINING WHETHER USER HAS BOARDED OR ALIGHTED VEHICLE BY USING SIGNAL RECEIVED FROM BEACONS INSTALLED INSIDE AND OUTSIDE VEHICLE**

(30) Priority: 13.07.2023 KR 20230090948
(71) Applicant: Tmoney Co., Ltd., Seoul 04637 (KR)
(72) Inventor: KIM, Han Jin, Seoul 04637 (KR); CHO, Jae Hun, Seoul 04637 (KR); CHOI, Hwal Seok, Seoul 04637 (KR); LEE, Ju Hak, Seoul 04637 (KR)
(74) Representative: Dehns
(86) International application number: PCT/KR2024/009665
(87) International publication number: WO 2025/014221

(57) **Abstract**

A state change method in which a user terminal changes its state between a boarding state and an alighting state is disclosed. The method comprises the steps of: configuring a state of the user terminal to a first state; and changing the state of the user terminal from the first state to a second state on the basis of a result of comparing a difference value between a reception frequency of a second type beacon signal and a reception frequency of a first type beacon signal with a predetermined threshold value.

## Description

### TECHNICAL FIELD

The present invention relates to a technology in which a user terminal carried by a person determines by itself whether the person has boarded or alighted from a vehicle such as a bus without user operation.

### BACKGROUND ART

BLE communication devices including smartphones are being developed to enable communication even at the widest and farthest distances possible. However, because deviations in transmission and reception characteristics of BLE communication differ by manufacturer and model of a device, reception sensitivity for a BLE signal transmitted from the same device is measured differently for each product.

Environmental influences such as an enclosed space or an obstacle cause reflection and scattering of a BLE signal, and due to this, there are limitations in determining accurate positioning or movement of a smartphone user through BLE communication.

Due to the above phenomena, when a beacon is installed inside a vehicle, a BLE signal may be transmitted even to the outside of the vehicle due to phenomena such as reflection and scattering by structures installed inside the vehicle and an inner wall of the vehicle.

As a result, a device having relatively high reception sensitivity for a BLE signal can receive a BLE signal of an internal beacon of the vehicle even from the outside of the vehicle.

Therefore, it is very difficult to perform BLE communication only with a user boarded in a vehicle except for a person existing outside the vehicle by installing only inside the vehicle, and it is practically impossible to determine a user boarded in the vehicle in such a manner.

BLE (Bluetooth Low Energy) communication operates largely in two modes: an advertising mode and a connection mode. In the advertising mode, a data transmission device may be referred to as an advertiser, and a reception device may be referred to as an observer.

In the advertising mode, an advertiser transmits data to all observer devices nearby without specifying a specific reception device. Using such a mode characteristic, it is possible to periodically transmit data to devices capable of BLE communication without performing a separate connection operation.

BLE communication is a wireless electromagnetic wave communication technology using a frequency in a 2.4 GHz band. When an electromagnetic wave encounters an object in a process of being radiated and traveling, phenomena such as reflection and scattering occur. At this time, specular reflection and diffuse reflection occur according to a state of a surface of an object, and in the case of specular reflection, a reflected wave having an angle of incidence (θi) and an angle of reflection (θr) identical to each other based on a normal line is generated according to the law of reflection.

Specular reflection occurs when a surface of an object is smooth and planar, but when it is not smooth and not planar, diffusion of electromagnetic waves due to diffuse reflection occurs so that the electromagnetic waves can reach an unspecified range.

When data is transmitted without specifying a specific target among observer devices located nearby in the advertising mode of BLE communication, a BLE signal having characteristics of an electromagnetic wave is transmitted to an unspecifiable range when it encounters an object. In such a case, BLE communication with a device located within a specific range is impossible.

### DETAILED DESCRIPTION OF THE INVENTION

### TECHNICAL PROBLEM

The present invention is for determining whether a user boards or alights from a vehicle using BLE communication between beacons installed inside and outside the vehicle and a smartphone.

### TECHNICAL SOLUTION

Since beacons and smartphones can transmit and receive data through BLE wireless communication, the presence or absence of a counterpart can be determined within an effective range where communication is possible. A method for determining boarding or alighting of a user's vehicle provided according to an aspect of the present invention uses communication between beacons installed inside and outside a vehicle and a user terminal (e.g., smartphone) of a user based on the above-described characteristics, and thereby, it is possible to distinguish a user boarding from the outside to the inside of the vehicle and a user alighting from the inside of the vehicle.

A user located outside a vehicle and a user located inside show a difference in relative reception frequency with respect to beacons installed inside and outside each vehicle. Therefore, a method for determining boarding or alighting of a user's vehicle provided according to an aspect of the present invention uses a configuration in which beacons are installed inside and outside the vehicle, and thereby, it is possible to distinguish a user located outside the vehicle, a user entering from the outside to the inside, and a user exiting from the inside to the outside.

A system for determining whether a user boards or alights from a vehicle provided according to an aspect of the present invention includes: an external beacon installed outside the vehicle to transmit information to a smartphone of the user and for determining an external position of the user; and an internal beacon installed inside the vehicle to transmit information to the smartphone of the user and for determining an internal position of the user. A method for determining whether a user boards or alights from a vehicle using the system includes: a step of adding a weight to a reception frequency of a beacon signal installed inside and outside the vehicle; a step of setting a boarding determination confirmation score for determining boarding determination of a user and an alighting determination confirmation score for determining alighting determination; a step of determining whether a user boards by comparing a score obtained by adding a weight to a signal received from a beacon installed inside and outside the vehicle with the boarding determination confirmation score; and a step of determining whether a user alights by comparing a score obtained by adding a weight to a signal received from a beacon installed inside and outside the vehicle with the alighting determination confirmation score.

According to an aspect of the present invention, a state change method in which a user terminal having a first state and a second state changes a state may be provided. The state change method includes: a step of the user terminal setting a state of the user terminal to a first state; and a step of the user terminal changing the state of the user terminal from the first state to a second state based on a result of comparing a difference value between a reception frequency of a second type beacon signal and a reception frequency of a first type beacon signal with a predetermined threshold value.

In this case, the first state may be a state in which the user terminal is inside the vehicle, and the second state may be a state in which the user terminal is outside the vehicle.

In this case, the first type beacon signal is a signal transmitted by at least one internal beacon among internal beacons installed in the vehicle, and the second type beacon signal is a signal transmitted by at least one external beacon among external beacons installed in the vehicle, and transmission energy of the first type beacon signal may be distributed more inside the vehicle than outside the vehicle, and transmission energy of the second type beacon signal may be distributed more outside the vehicle than inside the vehicle.

In this case, the first state may be a state in which the user terminal is outside the vehicle, and the second state may be a state in which the user terminal is inside the vehicle.

In this case, the second type beacon signal is a signal transmitted by at least one internal beacon among internal beacons installed in the vehicle, and the first type beacon signal is a signal transmitted by at least one external beacon among external beacons installed in the vehicle, and transmission energy of the second type beacon signal may be distributed more inside the vehicle than outside the vehicle, and transmission energy of the first type beacon signal may be distributed more outside the vehicle than inside the vehicle.

In this case, the step of setting the state of the user terminal to the first state includes a step of setting a predetermined variable score to a predetermined value, and a process of obtaining a result of comparing the difference value with the predetermined threshold value is a process of obtaining a result as to whether the variable score is greater than a predetermined second state confirmation score, and the user terminal may be configured to increase the variable score upon receiving a second type beacon signal and decrease the variable score upon receiving a first type beacon signal.

In this case, when a value obtained by subtracting the reception frequency of the first type beacon signal from the reception frequency of the second type beacon signal is changed from a state smaller than a predetermined positive value to a state larger than the predetermined positive value, the user terminal may be configured to change the state of the user terminal from the first state to the second state.

In this case, the first type beacon signal may be one pulse signal among first signals transmitted in a pulse train form, and the second type beacon signal may be one pulse signal among second signals transmitted in a pulse train form.

According to another aspect of the present invention, a state change method in which a user terminal having a first state and a second state changes a state may be provided. The state change method includes: a step of the user terminal setting a state of the user terminal to a first state and setting a predetermined variable score to a predetermined value; and a step of the user terminal changing the state of the user terminal from the first state to a second state if the variable score is greater than a predetermined second state confirmation score. And the user terminal is configured to increase the variable score upon receiving a second type beacon signal and decrease the variable score upon receiving a first type beacon signal.

In this case, the user terminal may be configured to increase the variable score by a predetermined value ΔI each time the second type beacon signal is received and decrease the variable score by a predetermined value ΔD each time the first type beacon signal is received.

In this case, the first type beacon signal may be one pulse signal among first signals transmitted in a pulse train form, and the second type beacon signal may be one pulse signal among second signals transmitted in a pulse train form.

The first state is a state in which the user terminal is inside a vehicle, the second state is a state in which the user terminal is outside the vehicle, the first type beacon signal is a signal transmitted by at least one internal beacon among internal beacons installed in the vehicle, the second type beacon signal is a signal transmitted by at least one external beacon among external beacons installed in the vehicle, transmission energy of the first type beacon signal may be distributed more inside the vehicle than outside the vehicle, and transmission energy of the second type beacon signal may be distributed more outside the vehicle than inside the vehicle.

According to an aspect of the present invention, a non-transitory computer-readable medium in which a program for causing a user terminal having a first state and a second state to execute a state change method for changing a state of the user terminal is recorded may be provided. In this case, the program includes a set of instruction codes for causing the user terminal to execute: a step of setting a state of the user terminal to a first state; and a step of changing the state of the user terminal from the first state to a second state based on a result of comparing a difference value between a reception frequency of a second type beacon signal and a reception frequency of a first type beacon signal with a predetermined threshold value.

According to an aspect of the present invention, a state change system of a user terminal including: external beacons installed in a vehicle to transmit a beacon signal toward the outside of the vehicle; internal beacons installed in the vehicle to transmit a beacon signal toward the inside of the vehicle; and a user terminal may be provided. In this case, the user terminal is configured to execute a state change method including: a step of setting a state of the user terminal to a first state; and a step of the user terminal changing the state of the user terminal from the first state to a second state based on a result of comparing a difference value between a reception frequency of a second type beacon signal and a reception frequency of a first type beacon signal with a predetermined threshold value. And the first type beacon signal is any one beacon signal among an external beacon signal transmitted by at least one of the external beacons and an internal beacon signal transmitted by at least one of the internal beacons. The second type beacon signal is the other beacon signal among an external beacon signal transmitted by at least one of the external beacons and an internal beacon signal transmitted by at least one of the internal beacons.

### EFFECTS OF THE INVENTION

When beacons are installed in both the inside and the outside of a vehicle to transmit data as in the present invention, a difference in reception frequency of transmission data of each beacon occurs when a user is located outside the vehicle and when the user is boarded inside the vehicle. There is an effect that boarding status of a user can be determined by assigning a weight to data received from each beacon based on this difference in reception frequency.

When it is possible to determine whether a user boards or alights from a vehicle in such a manner, there is an effect that it is possible to utilize in a specific information providing service such as payment of a vehicle usage fee, advertisement, and the like.

According to the present invention, accuracy in determining whether a user boards a vehicle can be improved by comparing a cumulative value of reception frequencies of internal beacon signals and a cumulative value of reception frequencies of external beacon signals received according to a change in a position of a user, without simply comparing only a reception frequency of a beacon.

### BRIEF DESCRIPTION OF DRAWINGS

FIG. 1 shows a state in which beacons provided according to an embodiment of the present invention are arranged in a vehicle.
FIG. 2 is a flowchart showing a boarding confirmation method provided according to an embodiment of the present invention.
FIG. 3 is a flowchart showing an alighting confirmation method provided according to an embodiment of the present invention.
FIG. 4 is a flowchart showing a method for changing a boarding/alighting state provided according to an embodiment of the present invention.
FIG. 5 is a flowchart showing a state change method of a user terminal provided according to another embodiment of the present invention.
FIG. 6 shows a concept of a user terminal provided according to an embodiment of the present invention being provided with a program for causing the user terminal to execute a state change method for changing a state of the user terminal from an app server.
FIG. 7 shows a configuration of a state change system for changing a state of a user terminal provided according to an embodiment of the present invention.
FIG. 8 shows an example of a form of signals transmitted by external beacons and internal beacons provided according to an embodiment of the present invention.

### DESCRIPTION OF EMBODIMENTS

Hereinafter, embodiments of the present invention will be described with reference to the accompanying drawings. However, the present invention is not limited to the embodiments described in the present specification and may be implemented in various different forms. Terms used in the present specification are for aiding understanding of the embodiments and are not intended to limit the scope of the present invention. In addition, singular forms used hereinafter also include plural forms unless the phrases clearly indicate the opposite meaning.

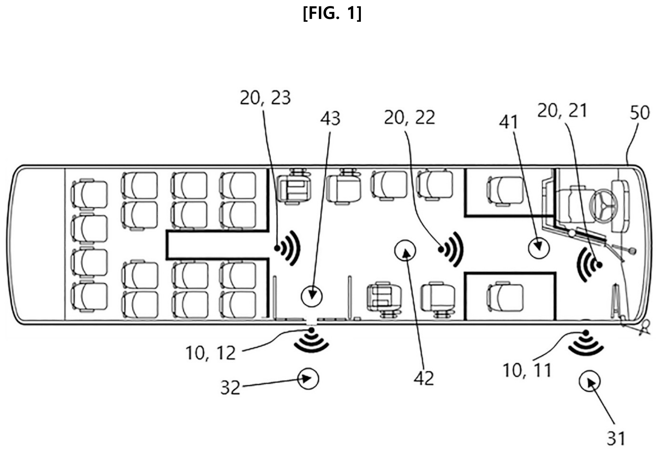

FIG. 1 shows a state in which beacons provided according to an embodiment of the present invention are arranged in a vehicle.

Beacons arranged in a vehicle 50 according to an embodiment of the present invention include a plurality of external beacons 10 including a first external beacon 11 and a second external beacon 12 that are installed outside a vehicle door to transmit signals to the outside of the vehicle, and include a plurality of internal beacons 20 including a first internal beacon 21, a second internal beacon 22, and a third internal beacon 23 that are installed inside the vehicle to transmit signals to the inside of the vehicle.

The vehicle 50 may have a front door and a rear door. At this time, a first external beacon 11 may be installed at or near the front door to transmit a signal toward an outward direction of a body of the vehicle 50. And a second external beacon 12 may be installed at or near the rear door to transmit a signal toward the outward direction of the body of the vehicle 50. If such conditions can be satisfied, the first external beacon 11 and/or the second external beacon 12 do not necessarily have to be installed on an outer wall of the vehicle. For example, the first external beacon 11 and/or the second external beacon 12 may be arranged on an inner surface of a glass window through which radio waves can pass installed in the vehicle 50 to transmit a signal toward the outward direction of the vehicle 50.

The first internal beacon 21, the second internal beacon 22, and the third internal beacon 23 are basically installed inside the vehicle 50 to transmit a signal toward an internal space of the vehicle 50. In a preferred embodiment, a main radiation direction of signals transmitted by the first internal beacon 21, the second internal beacon 22, and the third internal beacon 23 may be a longitudinal direction of the vehicle rather than a direction of a window, a front door, or a rear door of a vehicle 50, but the present invention is not necessarily limited to such a configuration.

In a signal transmitted by each external beacon, information that a beacon device that transmitted the signal is an external beacon and not an internal beacon and a device identifier that can be distinguished from other beacon devices may be included. Similarly, in a signal transmitted by each internal beacon, information that a beacon device that transmitted the signal is an internal beacon and not an external beacon and a device identifier that can be distinguished from other beacon devices may be included.

The respective external beacons and internal beacons may periodically transmit beacon signals in a pulse train form instead of constantly transmitting the beacon signals. Accordingly, a user terminal can count how many times a specific beacon signal transmitted by a specific beacon has been received for a predetermined time. That is, the user terminal can determine a reception frequency of a beacon signal transmitted from a specific beacon device.

A transmission frequency of a beacon signal transmitted by each of the beacons installed in a vehicle 50 may be predetermined and designed as a predetermined value.

When a user is at a first external position 31, a reception frequency for receiving signals of external beacons 10 is measured relatively higher than a reception frequency for receiving signals of internal beacons 20. At this time, a user terminal of the user can determine by itself that the user terminal is located outside a vehicle, and accordingly, can determine that the user terminal is in a state before boarding a vehicle.

Thereafter, when the user moves to a first internal position 41, the reception frequency at which the user terminal receives signals of the external beacons 10 decreases compared to before, and the reception frequency at which the user terminal receives signals of the internal beacons 20 increases compared to before.

Thereafter, when the user further enters the inside of the vehicle and reaches a second internal position 42, the reception frequency at which the user terminal receives signals of the internal beacons 20 becomes relatively higher than before. At this time, the user terminal of the user can determine by itself that it is located inside the vehicle 50, and accordingly, can determine that the user terminal is in a boarding state.

Thereafter, when the user passes a third internal position 43 and alights at a second external position 32, the reception frequency at which the user terminal receives signals of the internal beacons 20 further decreases compared to before, and the reception frequency at which the user terminal receives signals of the external beacons 10 further increases compared to before. At this time, the user terminal of the user can determine by itself that the user terminal is located outside the vehicle, and accordingly, can determine that the user terminal is in an alighting state.

In a process in which the user device moves through the first external position 31, the first internal position 41, the second internal position 42, the third internal position 43, and the second external position 32, relative differences in reception frequencies at which the smartphone receives signals from the external beacons 10 and the internal beacons 20 are shown at each position. At this time, the relative reception frequency differences for signals from the external beacons 10 and the internal beacons 20 vary according to a model of the user terminal. At this time, in each user terminal, a reception frequency weight for each of the received internal beacons 20 and external beacons 10 can be assigned.

In one embodiment, it can be assumed that a ratio of reception frequencies of a first external beacon 11, a first internal beacon 21, and a second internal beacon 22 received by a user terminal of a user is 4:2:2 when the user is at a first external position 31. At this time, it is assumed that signals transmitted from a second external beacon 12 and a third internal beacon 23 are not received by the user terminal. Since the first external beacon 11 transmits a signal toward the outside of the vehicle 50, a user terminal at the first external position 1 can detect a transmission signal of the first external beacon 11 without omission. In contrast, since the first internal beacon 21 and the second internal beacon 22 transmit signals toward the inside of the vehicle 50, the user terminal can intermittently detect only some pulses among signals transmitted from the first internal beacon 21 and the second internal beacon 22. At this time, as long as a reception strength of a beacon signal detected by the user terminal is greater than a predetermined threshold value, it is determined that a corresponding signal is detected regardless of the strength of the received signal. Even a weak signal affects a value of a reception frequency of a signal once it is detected.

In the above example, a reception strength of a signal of the first external beacon 11 is greater than a reception strength of a signal of the first internal beacon 21 and is also greater than a reception strength of a signal of the second internal beacon 22. However, the user terminal may have received the signal from the first external beacon 11, for example, 4 times per unit time, the signal from the first internal beacon 21, for example, 2 times per unit time, and the signal from the second internal beacon 22, for example, 2 times per unit time. In this case, a reception frequency received by the user terminal from the first external beacon 11 for unit time is 4, and a reception frequency received by the user terminal from the first internal beacon 21 and the second internal beacon 22 for unit time is also 4 (=2+2). That is, a reception frequency at which the user terminal receives signals from external beacons and a reception frequency at which the user terminal receives signals from internal beacons are equal as 4:4. In such a case, it is difficult to determine a position of a user only by absolute numerical comparison of each beacon signal reception frequency. That is, in such an example, since a possibility that the user terminal exists outside a bus and a possibility that the user terminal exists inside the bus are equal as 4:4, it is difficult to determine the position of the user. In this case, if the reception frequency of signals from the external beacons received by the smartphone is multiplied by a predetermined weight, a value of the reception frequency received from the external beacons is corrected to a larger value, and thus it can be determined that the user terminal is located outside the vehicle 50.

In another situation, when a user waits at a third internal position 43 inside near a rear door of a vehicle 50, it can be assumed that a ratio of a reception frequency of a signal from a second external beacon 12 received by a user terminal and a reception frequency of a signal from a third internal beacon 23 is 2:2. Even in such a case, it is difficult to determine whether the user enters the inside of the vehicle only by absolute numerical comparison of beacon signal reception frequencies. In such a case, if a signal of the third internal beacon 23 received by the user terminal is multiplied by a predetermined weight, the reception frequency of signals received from internal beacons increases, and thus it can be determined that the user terminal is located inside the vehicle 50.

In an embodiment of the present invention, a user terminal determines whether a user is inside or outside a vehicle 50 in a manner of adding or subtracting a weighted reception frequency to or from signals from external beacons 10 and internal beacons 20 received, after previously setting a boarding determination score and an alighting determination score.

For example, in order to confirm a boarding state of a user, a user terminal may previously set a predetermined boarding confirmation score (e.g., 10 points) and previously set a predetermined basic score (e.g., 3 points). And the user terminal may set a predetermined variable score to have the basic score. Thereafter, when the user terminal receives signals from internal beacons 20, the variable score may be caused to increase. In a state where the variable score has increased from the basic score, when the user terminal receives signals from external beacons 10, the variable score may be caused to decrease. When a reception frequency of signals from the internal beacons 20 increases during a process in which the user boards the vehicle 50 and the variable score reaches the boarding confirmation score, the user terminal may change a state of the user to a boarding state.

In the process of confirming the boarding state of the user described above, the variable score may have a value lower than the basic score. However, even in this case, when the variable score reaches a predetermined first minimum score, the variable score may be set not to decrease any more. That is, a lower limit of the variable score may be set to be the predetermined first minimum score.

Conversely, in order to confirm an alighting state of a user, a user terminal may previously set a predetermined alighting confirmation score (e.g., 10 points) and previously set a predetermined basic score (e.g., 3 points). And the user terminal may set a predetermined variable score to have the basic score. Thereafter, when the user terminal receives signals from external beacons 10, the variable score may be caused to increase. In a state where the variable score has increased from the basic score, when the user terminal receives signals from internal beacons 20, the variable score may be caused to decrease. When a reception frequency of signals from the external beacons 10 increases during a process in which the user alights from the vehicle 50 and the variable score reaches the alighting confirmation score, the user terminal may change a state of the user to an alighting state.

In the process of confirming the alighting state of the user described above, the variable score may have a value lower than the basic score. However, even in this case, when the variable score reaches a predetermined second minimum score, the variable score may be set not to decrease any more. That is, a lower limit of the variable score may be set to be the predetermined second minimum score.

The first minimum score and the second minimum score may be set to the same value, or may be set to different values.

A user terminal may be configured to allocate memory for storing a variable meaning a 'current state' and a variable meaning a 'variable score' and manage values of the variables. In addition, the user terminal may store values called a predetermined previously determined 'boarding standby basic score' and 'alighting standby basic score'. At this time, the 'boarding standby basic score' and the 'alighting standby basic score' may be the same value or different values. In addition, the user terminal may be configured to increase or decrease the value of the 'variable score' when a predetermined condition is satisfied, and at this time, may store a unit increment value ΔI and a unit decrement value ΔD which are previously determined.

In this case, in one embodiment, an absolute value of ΔD may be greater than an absolute value of ΔI. That is, ΔD = k * ΔI may hold, where k may be a weight having a value greater than 1.

Alternatively, in another embodiment, the absolute value of ΔI may be identical to the absolute value of ΔD.

Alternatively, in still another embodiment, the absolute value of ΔD may be smaller than the absolute value of ΔI. For example, in an environment according to one embodiment, only one external beacon is installed outside each of a front door and a rear door, and two to three internal beacons may be installed inside the front door, and according to this embodiment, a reception frequency of internal beacon signals is relatively greater. Due to this, ΔD, which decreases a score for boarding confirmation, may be set to have a value smaller than ΔI. This is because the number of internal beacons for boarding confirmation is greater than the number of external beacons.

Both the ΔI and ΔD may be positive numbers.

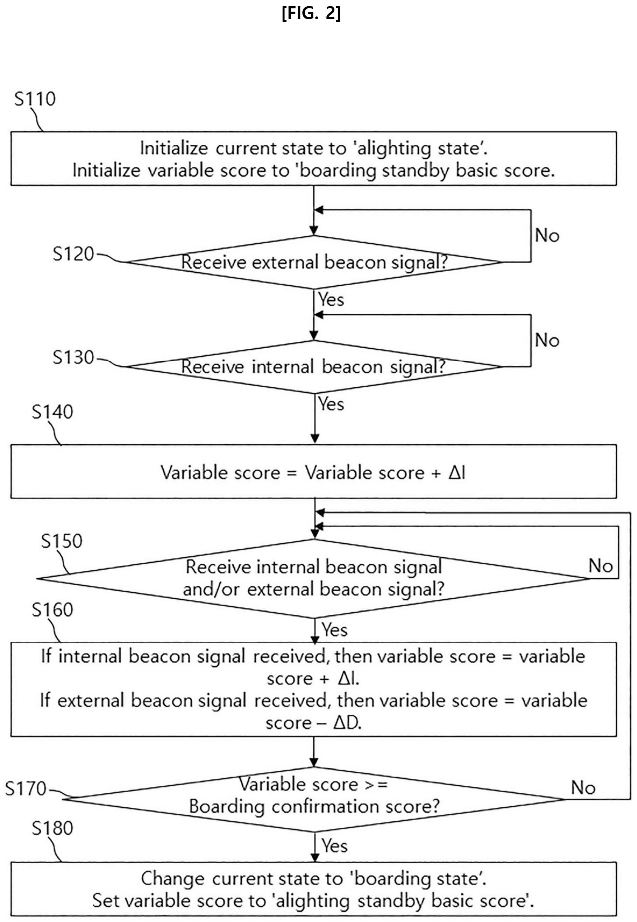

FIG. 2 is a flowchart showing a boarding confirmation method provided according to an embodiment of the present invention.

All steps of FIG. 2 are executed in a user terminal carried by a user.

In step S110, the current state may be initialized to an 'alighting state', and the variable score may be initialized to the 'boarding standby basic score'.

In step S120, it may be determined whether the user terminal has received an external beacon signal, which is a signal transmitted by at least one external beacon among external beacons 10. When the external beacon signal is received, the process proceeds to step S130, and when not received, step S120 may be repeated.

In step S130, it may be determined whether the user terminal has received an internal beacon signal, which is a signal transmitted by at least one internal beacon among internal beacons 20. When the internal beacon signal is received, the process proceeds to step S140, and when not received, step S130 may be repeated.

In step S140, the value of the variable score is updated by adding the ΔI to the variable score. The reason for adding the ΔI to the variable score is that the internal beacon signal was received once in step S130.

In step S150, it is determined whether an internal beacon signal and/or an external beacon signal have been received. When not received, step S150 is repeated, and when received, the process proceeds to step S160.

Since the external beacon signal and the internal beacon signal are transmitted independently of each other, the user terminal may receive both the external beacon signal and the internal beacon signal in step S150.

In step S160, if the internal beacon signal is received, the value of the variable score is updated by adding the ΔI to the variable score, and if the external beacon signal is received, the value of the variable score may be updated by subtracting the ΔD from the variable score.

If the internal beacon signal is received N1 times in step S150, the ΔI is added N1 times to the variable score in step S160. If the external beacon signal is received N1 times in step S150, the ΔD may be subtracted N1 times from the variable score in step S160.

In step S170, if the variable score is equal to or greater than the boarding confirmation score, the process proceeds to step S180, and if not, the process may return to step S150.

In step S180, the current state is changed to a 'boarding state', and the variable score may be set to the 'alighting standby basic score'.

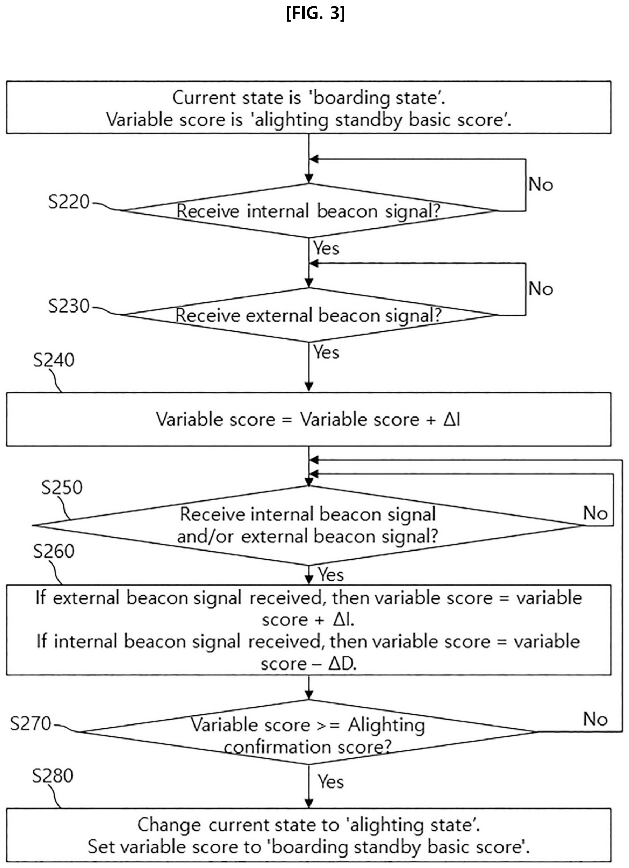

FIG. 2 described above shows a process of being changed to a boarding state by a user moving from the outside to the inside of a vehicle. FIG. 3 to be described later shows a process of being changed to an alighting state by a user moving from the inside to the outside of a vehicle.

FIG. 3 is a flowchart showing an alighting confirmation method provided according to an embodiment of the present invention.

All steps of FIG. 3 are executed in a user terminal carried by a user.

Step S220 of FIG. 3 may be a step executed in succession after step S180 of FIG. 2.

In step S220, it may be determined whether the user terminal has received an internal beacon signal which is a signal transmitted by at least one internal beacon among internal beacons 20. When the internal beacon signal is received, the process proceeds to step S230, and when not received, step S220 may be repeated.

In step S230, it may be determined whether the user terminal has received an external beacon signal which is a signal transmitted by at least one external beacon among external beacons 10. When the external beacon signal is received, the process proceeds to step S240, and when not received, step S230 may be repeated.

In step S240, the value of the variable score is updated by adding the ΔI to the variable score. The reason for adding the ΔI to the variable score is that the external beacon signal was received once in step S230.

In step S250, it is determined whether the external beacon signal and/or the internal beacon signal have been received. When not received, step S250 is repeated, and when received, the process proceeds to step S260.

Since the external beacon signal and the internal beacon signal are transmitted independently of each other, the user terminal may receive both the external beacon signal and the internal beacon signal in step S250.

In step S260, if the external beacon signal is received, the value of the variable score is updated by adding the ΔI to the variable score, and if the internal beacon signal is received, the value of the variable score may be updated by subtracting the ΔD from the variable score.

If the external beacon signal is received N1 times in step S250, the ΔI is added N1 times to the variable score in step S260. If the internal beacon signal is received N1 times in step S250, the ΔD may be subtracted N1 times from the variable score in step S260.

In step S270, if the variable score is equal to or greater than the alighting confirmation score, the process proceeds to step S280, and if not, the process may return to step S250.

In step S280, the current state is changed to an 'alighting state', and the variable score may be set to the 'boarding standby basic score'.

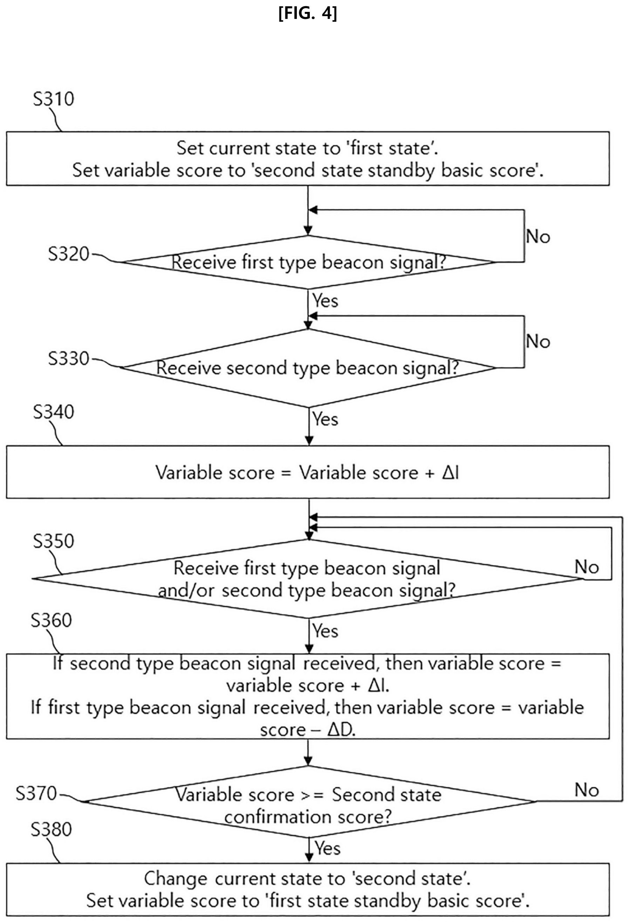

FIG. 2 and FIG. 3 show a boarding confirmation method and an alighting confirmation method, respectively, provided according to an embodiment of the present invention, and these methods may be presented as shown in FIG. 4 by being integrated.

FIG. 4 is a flowchart showing a method for changing a boarding/alighting state provided according to an embodiment of the present invention.

All steps of FIG. 4 are executed in a user terminal carried by a user.

In step S310, the current state may be initialized to a 'first state', and the variable score may be initialized to a 'second state standby basic score'.

In this case, if the first state is an 'alighting state', the second state standby basic score may be the 'boarding standby basic score'.

In contrast, if the first state is a 'boarding state', the second state standby basic score may be the 'alighting standby basic score'.

In step S320, it may be determined whether the user terminal has received a first type beacon signal which is a signal transmitted by at least one first type beacon among first type beacons. When the first type beacon signal is received, the process proceeds to step S330, and when not received, step S320 may be repeated.

In this case, if the first type beacons are the external beacons 10, the at least one first type beacon means at least one external beacon, and the first type beacon signal means the external beacon signal.

In contrast, if the first type beacons are the internal beacons 20, the at least one first type beacon means at least one internal beacon, and the first type beacon signal means the internal beacon signal.

In step S330, it may be determined whether the user terminal has received a second type beacon signal which is a signal transmitted by at least one second type beacon among second type beacons. When the second type beacon signal is received, the process proceeds to step S340, and when not received, step S330 may be repeated.

In this case, if the second type beacons are the internal beacons 20, the at least one second type beacon means at least one internal beacon, and the second type beacon signal means the internal beacon signal.

In contrast, if the second type beacons are the external beacons 10, the at least one second type beacon means at least one external beacon, and the second type beacon signal means the external beacon signal.

In step S340, the value of the variable score is updated by adding the ΔI to the variable score. The reason for adding the ΔI to the variable score is that the second type beacon signal was received once in step S330.

In step S350, it is determined whether the second type beacon signal and/or the first type beacon signal have been received. When not received, step S350 is repeated, and when received, the process proceeds to step S360.

Since the first type beacon signal and the second type beacon signal are transmitted independently of each other, the user terminal may receive both the first type beacon signal and the second type beacon signal in step S350.

In step S360, if the second type beacon signal is received, the value of the variable score is updated by adding the ΔI to the variable score, and if the first type beacon signal is received, the value of the variable score may be updated by subtracting the ΔD from the variable score.

If the second type beacon signal is received N1 times in step S350, the ΔI is added N1 times to the variable score in step S360. If the first type beacon signal is received N1 times in step S350, the ΔD may be subtracted N1 times from the variable score in step S360.

In this case, the second type beacons may be the internal beacons 20, and the first type beacons may be the external beacons 10.

In contrast, the second type beacons may be the external beacons 10, and the first type beacons may be the internal beacons 20.

In step S370, if the variable score is equal to or greater than the second state confirmation score, the process proceeds to step S380, and if not, the process may return to step S350.

In this case, if the first state is an 'alighting state', the second state confirmation score may be the 'boarding confirmation score'.

In contrast, if the first state is a 'boarding state', the second state confirmation score may be the 'alighting confirmation score'.

In step S380, the current state is changed to a 'second state', and the variable score may be set to a 'first state standby basic score'.

In this case, if the first state is an 'alighting state', the second state is a 'boarding state', and the first state standby basic score may be the 'alighting standby basic score'.

In contrast, if the first state is a 'boarding state', the second state is an 'alighting state', and the first state standby basic score may be the 'boarding standby basic score'.

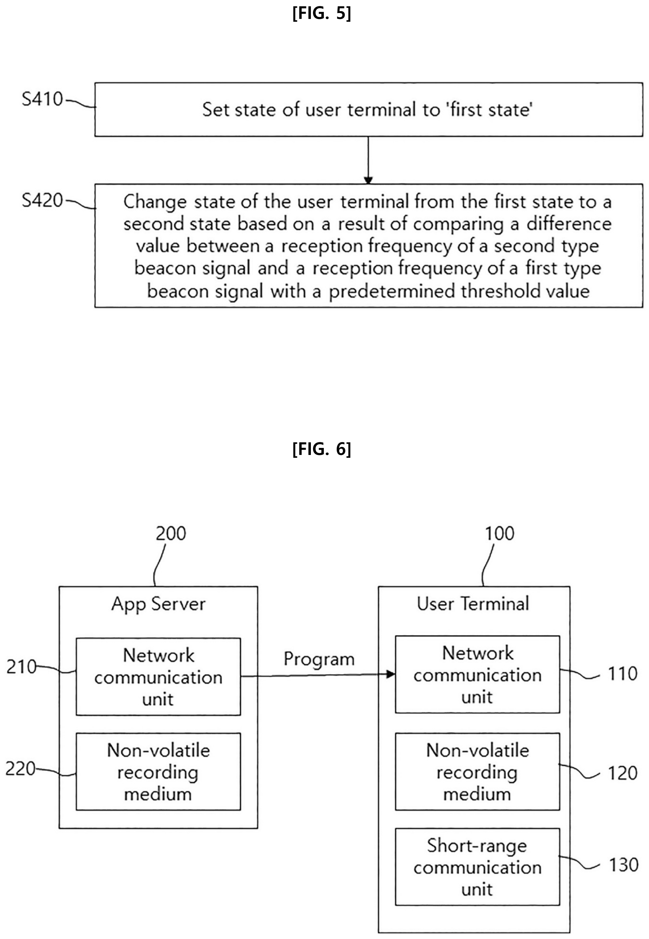

FIG. 5 is a flowchart showing a state change method of a user terminal provided according to another embodiment of the present invention.

The state change method is a state change method in which a user terminal having a first state and a second state changes a state. The state change method may include: a step S410 of the user terminal setting a state of the user terminal to a first state; and a step S420 of the user terminal changing the state of the user terminal from the first state to a second state based on a result of comparing a difference value between a reception frequency of a second type beacon signal and a reception frequency of a first type beacon signal with a predetermined threshold value.

In this case, when a value obtained by subtracting the reception frequency of the first type beacon signal from the reception frequency of the second type beacon signal is changed from a state smaller than a predetermined positive value to a state larger than the predetermined positive value, the user terminal may be configured to change the state of the user terminal from the first state to the second state.

In this case, the first type beacon signal is one pulse signal among first signals transmitted in a pulse train form, and the second type beacon signal may be one pulse signal among second signals transmitted in a pulse train form.

In this case, the first state is an alighting state in which the user terminal is located outside a vehicle 50, and the second state may be a boarding state in which the user terminal is located inside the vehicle 50. And the first type beacon signal is a signal transmitted by at least one external beacon among external beacons 10 installed in the vehicle 50 so as to transmit a beacon signal toward the outside of the vehicle 50, and the second type beacon signal may be a signal transmitted by at least one internal beacon among internal beacons 20 installed in the vehicle 50 so as to transmit a beacon signal toward the inside of the vehicle 50.

Alternatively, the first state is a boarding state in which the user terminal is inside the vehicle 50, and the second state may be an alighting state in which the user terminal is outside the vehicle 50. And the first type beacon signal is a signal transmitted by at least one internal beacon among internal beacons 20 installed in the vehicle 50 so as to transmit a beacon signal toward the inside of the vehicle 50, and the second type beacon signal may be a signal transmitted by at least one external beacon among external beacons 10 installed in the vehicle 50 so as to transmit a beacon signal toward the outside of the vehicle 50.

FIG. 6 shows a concept of a user terminal provided according to an embodiment of the present invention being provided with a program for causing the user terminal to execute a state change method for changing a state of the user terminal from an app server.

A predetermined program stored in a non-transitory computer-readable medium 220 of an app server 200 may be provided to a user terminal 100 through a network communication unit 210 of the app server 200 and a network communication unit 110 of the user terminal 100. The provided program may be recorded in a non-transitory computer-readable medium 120 of the user terminal 100. The non-transitory computer-readable medium may be, for example, an SSD, but is not limited thereto.

The user terminal 100 may include a short-range communication unit 130 that receives a beacon signal transmitted by the external beacons 10 and the internal beacons 20 described above, or transmits a beacon signal transmitted by the user terminal 100.

In one embodiment, the program may be a program for causing a user terminal 100 having a first state and a second state to execute a state change method for changing a state of the user terminal 100. The first state and the second state may be a boarding state and an alighting state, respectively, or may be an alighting state and a boarding state, respectively. At this time, the program may include a set of instruction codes for causing the user terminal to execute: a step of setting a state of the user terminal to a first state and setting a predetermined variable score to a predetermined value; and a step of changing the state of the user terminal from the first state to a second state if the variable score is greater than a predetermined second state confirmation score. At this time, the variable score may be stored in a predetermined memory provided in the user terminal. And the set of instruction codes may include instruction codes for increasing the variable score when the second type beacon signal is received, and decreasing the variable score when the first type beacon signal is received.

In another embodiment, the program may include a set of instruction codes for causing the user terminal 100 to execute: a step of setting the state of the user terminal 100 to a first state; and a step of changing the state of the user terminal from the first state to a second state based on a result of comparing a difference value between a reception frequency of a second type beacon signal and a reception frequency of a first type beacon signal with a predetermined threshold value.

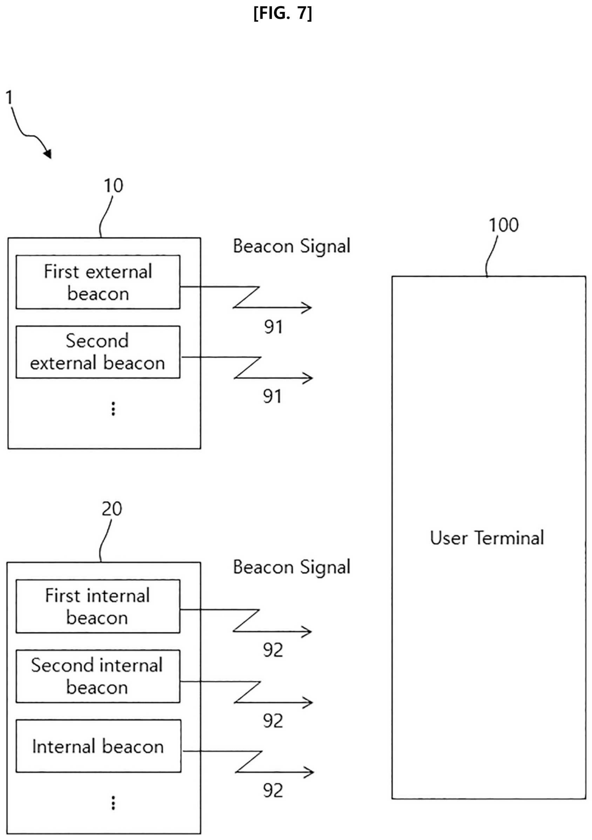

FIG. 7 shows a configuration of a state change system for changing a state of a user terminal provided according to an embodiment of the present invention.

The state change system 1 may include: external beacons 10 installed in a vehicle 50 to transmit a beacon signal toward the outside of the vehicle 50; internal beacons 20 installed in the vehicle 50 to transmit a beacon signal toward the inside of the vehicle 50; and a user terminal 100 carried by a user boarding or alighting from a vehicle.

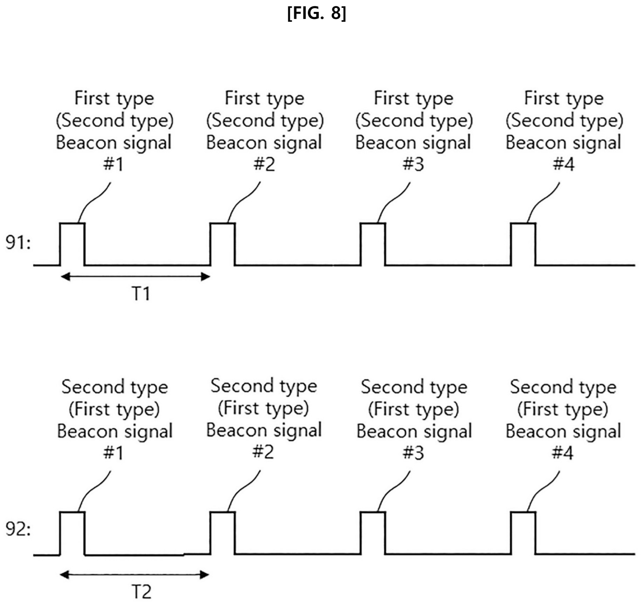

FIG. 8 shows an example of a form of signals transmitted by external beacons and internal beacons provided according to an embodiment of the present invention.

A signal 91 transmitted by external beacons 10 may have a pulse train form. The pulse train may be composed of a plurality of consecutive pulses. If the pulses have periodicity, a time interval between two adjacent pulses may be T1.

A signal 92 transmitted by internal beacons 20 may have a pulse train form. The pulse train may be composed of a plurality of consecutive pulses. If the pulses have periodicity, a time interval between two adjacent pulses may be T2.

The T1 and the T2 may be identical to each other or may be different from each other.

A user terminal 100 may count the number of received pulses included in the received signals 91 and 92. At this time, one pulse distinguished from other pulses in the signals 91 and 92 may be referred to as the first type beacon signal or the second type beacon signal.

Those skilled in the art to which the present invention pertains will be able to easily implement various changes and modifications within a range that does not depart from essential characteristics of the present invention by using the above-described embodiments of the present invention. Contents of each claim of the claims may be combined with other claims having no citation relationship within a range that can be understood through the present specification.

## Claims

1. A method for changing a state of a user terminal having two different states, the method comprising:
changing, by the user terminal, a state of the user terminal based on a result of comparing a difference value between a reception frequency at the user terminal of a second type beacon signal transmitted from a beacon installed in a vehicle and a reception frequency at the user terminal of a first type beacon signal transmitted from another beacon installed in the vehicle with a predetermined threshold value.

2. The method of claim 1,
wherein a first state among the two states is a state in which the user terminal is inside the vehicle, and
wherein a second state among the two states is a state in which the user terminal is outside the vehicle.

3. The method of claim 1 or 2,
wherein the first type beacon signal is a signal transmitted by at least one internal beacon among internal beacons installed in the vehicle,
wherein the second type beacon signal is a signal transmitted by at least one external beacon among external beacons installed in the vehicle,
wherein transmission energy of the first type beacon signal is distributed more inside the vehicle than outside the vehicle, and
wherein transmission energy of the second type beacon signal is distributed more outside the vehicle than inside the vehicle.

4. The method of claim 1,
wherein a first state among the two states is a state in which the user terminal is outside the vehicle, and
wherein a second state among the two states is a state in which the user terminal is inside the vehicle.

5. The method of claim 1 or 4,
wherein the second type beacon signal is a signal transmitted by at least one internal beacon among internal beacons installed in the vehicle,
wherein the first type beacon signal is a signal transmitted by at least one external beacon among external beacons installed in the vehicle,
wherein transmission energy of the second type beacon signal is distributed more inside the vehicle than outside the vehicle, and
wherein transmission energy of the first type beacon signal is distributed more outside the vehicle than inside the vehicle.

6. The method of claim 1,
further comprising, prior to the changing, setting, by the user terminal, the state of the user terminal to a first state among the two states,
wherein the setting of the state of the user terminal to the first state includes setting a predetermined variable score to a predetermined value,
wherein a process of obtaining the result of comparing the difference value with the predetermined threshold value is a process of obtaining a result as to whether the variable score is greater than a predetermined second state confirmation score, and
wherein the user terminal is configured to increase the variable score upon receiving a second type beacon signal and decrease the variable score upon receiving a first type beacon signal.

7. The method of claim 1,
wherein the user terminal is configured to change the state of the user terminal from a first state among the two states to a second state among the two states when a value obtained by subtracting the reception frequency of the first type beacon signal from the reception frequency of the second type beacon signal is changed from a state smaller than a predetermined positive value to a state larger than the predetermined positive value.

8. The method of claim 1,
wherein the first type beacon signal is one pulse signal among first signals transmitted in a pulse train form, and
wherein the second type beacon signal is one pulse signal among second signals transmitted in a pulse train form.

9. A method for changing a state of a user terminal having two different states, the method comprising:
setting, by the user terminal, a predetermined variable score to a predetermined value; and
changing, by the user terminal, a state of the user terminal if the variable score is greater than a predetermined second state confirmation score,
wherein the user terminal is configured to increase the variable score each time the user terminal receives a second type beacon signal transmitted from a beacon installed in a vehicle, and decrease the variable score each time the user terminal receives a first type beacon signal transmitted from another beacon installed in the vehicle.

10. The method of claim 9,
wherein the user terminal is configured to increase the variable score by a predetermined value ΔI each time the second type beacon signal is received, and decrease the variable score by a predetermined value ΔD each time the first type beacon signal is received.

11. The method of claim 9,
wherein the first type beacon signal is one pulse signal among first signals transmitted in a pulse train form, and
wherein the second type beacon signal is one pulse signal among second signals transmitted in a pulse train form.

12. The method of claim 9,
wherein a first state among the two states is a state in which the user terminal is inside the vehicle,
wherein a second state among the two states is a state in which the user terminal is outside the vehicle,
wherein the first type beacon signal is a signal transmitted by at least one internal beacon among internal beacons installed in the vehicle,
wherein the second type beacon signal is a signal transmitted by at least one external beacon among external beacons installed in the vehicle,
wherein transmission energy of the first type beacon signal is distributed more inside the vehicle than outside the vehicle, and
wherein transmission energy of the second type beacon signal is distributed more outside the vehicle than inside the vehicle.

13. A non-transitory computer-readable medium in which a program for causing a user terminal having two different states to execute a state change method for changing a state of the user terminal is recorded,
wherein the program includes a set of instruction codes for causing the user terminal to execute:
changing a state of the user terminal based on a result of comparing a difference value between a reception frequency at the user terminal of a second type beacon signal transmitted from a beacon installed in a vehicle and a reception frequency at the user terminal of a first type beacon signal transmitted from another beacon installed in the vehicle with a predetermined threshold value.

14. A state change system of a user terminal comprising:
external beacons installed in a vehicle so as to transmit an external beacon signal toward the outside of the vehicle;
internal beacons installed in the vehicle so as to transmit an internal beacon signal toward the inside of the vehicle; and
a user terminal having two different states,
wherein the user terminal is configured to execute a state change method comprising:
changing a state of the user terminal based on a result of comparing a difference value between a reception frequency at the user terminal of a second type beacon signal and a reception frequency at the user terminal of a first type beacon signal with a predetermined threshold value,
wherein the first type beacon signal is any one of the external beacon signal and the internal beacon signal, and
wherein the second type beacon signal is the other one of the external beacon signal and the internal beacon signal.
